# EUROPÄISCHE PATENTANMELDUNG

(11) **EP 3 321 518 A2**
(43) Veröffentlichungstag der Anmeldung: **16.05.2018**
(21) Anmeldenummer: 17200055.6
(22) Anmeldetag: 06.11.2017
(51) Int. Cl.: F16B 5/00, F16B 3/00, F16B 5/06

(54) **STECKSCHIEBE-REIBBEWEGUNGSVERSCHLUSS**

(30) Priorität: 09.11.2016 DE 102016013348
(71) Anmelder: Maus, Roland, 57320 Colmen (FR)
(72) Erfinder: Maus, Roland, 57320 Colmen (FR)
(74) Vertreter: Pfrang, Tilman

(57) **Zusammenfassung**

Bei der Erfindung handelt es sich um einen Steckschiebe-Reibbewegungsverschluss. Eine Befestigungsanordnung aus zwei oder mehreren Elementen mit einem System von Führungsausnehmungen (7) und Ausbuchtungen (6), wobei der seitliche Teil der Ausbuchtungen (6) in seiner geometrischen Querschnittsform dem unteren Teil der Führungsausnehmungen entspricht. Der seitliche Teil der Ausbuchtungen (6) ist so abgeflacht, dass diese geradlinig in die ebenfalls im seitlichen Teil abgeflachten Führungsausnehmungen des anderen Elements einsetzbar sind und danach Ausbuchtungen und Führungsausnehmungen mit Gleitspiel zueinander führbar sind.

Ein oder mehrere ineinander geführte Konusse oder Keile (4) führen in einer Reibbewegung mit den dazu passenden Gegenstücken (5) die Einbuchtungen und Ausbuchtungen in einer oder mehreren Richtungen zu einem Formschluss zusammen. Hier entsteht nun ein Kraftverschluss, der hohe Kräfte aus verschiedenen Richtungen einzeln oder gleichzeitig aufnehmen kann. Bel dieser Erfindung handelt es sich um einen lösbaren Kraftverschluss.

## Beschreibung

Die vorliegende Erfindung betrifft eine Befestigungsanordnung, die durch mindestens zwei Schiebebewegungen aus verschiedenen Winkeln formschlüssig zusammengeführt wird. Die Anzahl der Verbindungen lässt sich in beliebige Richtungen erweitern.

Ähnliche formschlüssige Verbindungen weisen keine so kraftschlüssigen Verbindungen auf, die geradlinig einsetzbar sind und Kräfte aus verschiedenen Richtungen kontrolliert aufnehmen können.

Ähnliche formschlüssige Verbindungen können von vorne nicht geradlinig, ohne Kippbewegungen eingesetzt werden.

Bei ähnlichen formschlüssigen Verbindungen, wie z.B. Patentanmeldung DE1021871BC1 und EP1371860A2 ist die optimale Kraftaufnahme nicht in alle Richtungen möglich. Einsatzmöglichkeiten bei dieser Erfindung sind hier im Bereich der industrie, besonders im Bereich der Automobilindustrie. Ein Schnellwechsel- oder Schnellspannsystem für Einrichtungselemente, die im Fahrzeug wechselbar positioniert werden, vor allem im Bereich der Ladungssicherung. Nach TÜV-Prüfvorschriften müssen die auftretenden Kräfte in einem Bereich von 180°, also auch in Längsrichtung der Aus- und Einbuchtungen des o.g. Patentes, die beim Aufprall entstehenden Kräfte auffangen, was nur mit dieser Erfindung hier erreicht wird. Mit dieser Erfindung ist es möglich Menschen mit Behinderung, vor allem Rollstuhlfahrer schneller und sicherer im Fahrzeug zu befestigen, auch als Selbstfahrer.

Bei ähnlicher Patentanmeldung Nr. P3046758.4 werden die Teile wie ein Clip eingesteckt. Beim lösen findet hier eine unumgängliche Materiaiverformung statt, die sogar zerstörend sein kann.

Ausgehend hiervon war daher die Aufgabe der Erfindung, eine ein- oder mehrseitige formschlüssige Verbindung herzustellen, die sowohl von vorne geradlinig eingesteckt, als auch von der Seite eingeschoben werden kann. Die Verbindung soll auftretende Kräfte oder Belastungen gezielt aus einer Richtung oder gleichzeitig aus verschiedenen Richtungen aufnehmen und halten können. Die Verbindung soll lösbar sein. Die Verbindungselemente sollen kostengünstig herstellbar sein.

Die Aufgabe wurde dadurch gelöst, dass mit einer Befestigungsanordnung aus zwei oder mehreren Elementen mit einem System von Ein- und Ausbuchtungen ein schienenartiges Element (1) mit einer oder mehreren Ausbuchtungen (6) in ein Halteelement (2) mit einer oder mehreren Führungsausnehmungen (7), die in verschiedenen Richtungen angeordnet sein können von vorne eingesteckt oder von der Seite eingeschoben werden. Die Halteelemente (1) werden durch kontrollierte Bewegungen bzw. Bewegungsfolgen eines oder mehrerer Schiebeelemente (3) formschlüssig in die Führungsausnehmungen der Halteelemente (2) geführt und in dieser Position gehalten.

Mit diesem Verschluss ist es möglich, durch kontrollierte Bewegungsfolgen, Befestigungspositionen zu wechseln. Fixiermöglichkeiten (3) sind hier z.B. Schraube, Stift, Keil, Kegel, Pyramide, Kugel, die in einer Dreh-, Steck-, Zieh- oder Schiebebewegung die Einbuchtungen und Ausbuchtungen in einer oder mehreren Richtungen formschlüssig zusammenführen. Die Schiebeelemente, die die Ein- und Ausbuchtungen zusammenführen, können sich je nach Anforderung im Befestigungselement oder an den innen- oder Aussenflächen der Befestigungselemente befinden.

Mit diesem Schnellspann-oder Schnellwechselsystem ist es möglich, Andocksysteme im Bereich Strasse, Bahn, Schifffahrt, Flugzeug, Militär, Industrie, Maschinenbau, Serienfertigung, Baugewerbe, Haushalt, Sport und Freizeit herzustellen. Dieser Verschluss kann schnell und einfach hohe Kräfte oder Gewichte aufnehmen. So können hohe Kräfte oder Lasten festgehalten, gesichert und transportiert werden. Die Halteelemente können mechanisch oder im Strangpressverfahren kostengünstig hergestellt werden.

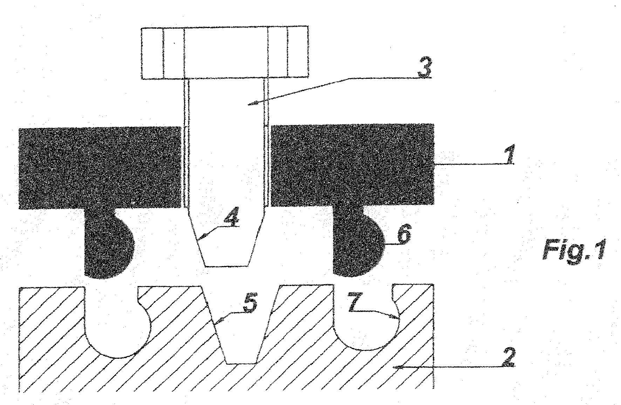

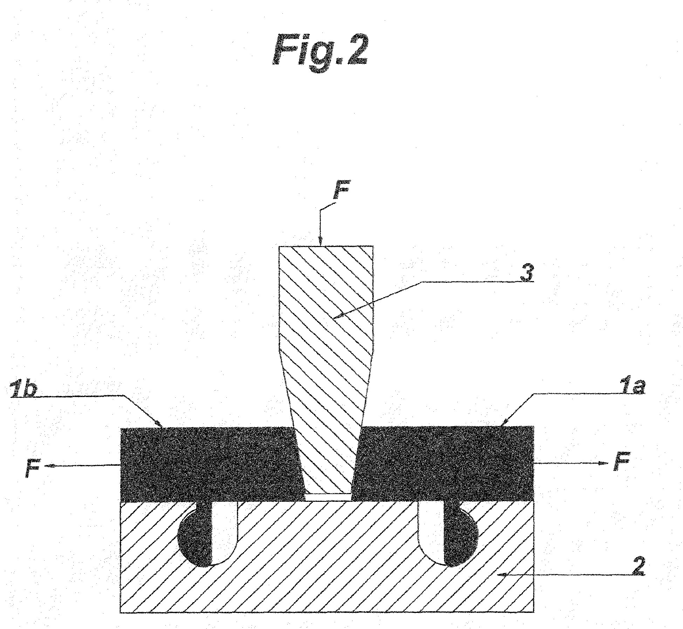

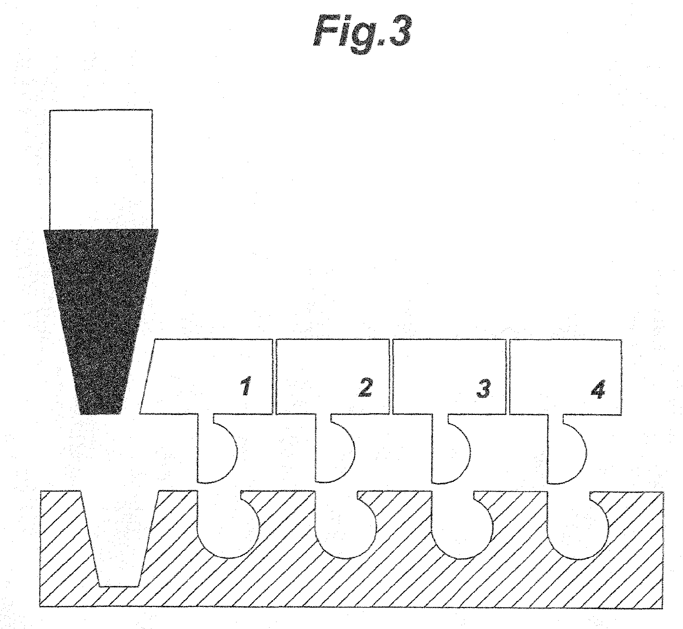

## Patentansprüche

1. Jalousieanordnung für ein Artikel-Ausgabesystem, umfassend einen Schrank (2), Fächer, Boxen oder Schubladen (4) für auszugebende Artikel, zwei miteinander gekoppelte Jalousien (6, 8; 10, 12) für den Frontbereich des Schranks sowie Öffnungsmittel für die Jalousien zur Artikelausgabe,
**dadurch gekennzeichnet, dass**
die Jalousien (6, 8; 10, 12) in der Länge derart bemessen und angeordnet sind, dass sich ihre Schließkanten im Frontbereich des Schranks (2) befinden und ihre anderen Endkanten in der Schließstellung der Jalousien mit einem Abstand (A) voneinander angeordnet sind, der mindestens die Abmessung der größten Fachhöhe hat,
Positioniermittel (40) vorgesehen sind, um die geschlossenen Jalousien (10, 12) mit den Schließkanten 18, 20) vor ein ausgewähltes Fach (4) mit auszugebenden Artikeln zu verfahren, und
Öffnungs-/Schließmittel (60) die Schließkanten der vor ein ausgewähltes Fach verfahrenen Jalousien (10, 12) für die Öffnung des Fachs (4) auseinander bewegen, wobei die Jalousien (10, 12) nach der Artikelausgabe wieder zusammengefahren werden.

2. Jalousieanordnung nach Anspruch 1, **dadurch gekennzeichnet, dass** Zugfedern zwischen den anderen Endkanten der Jalousien vorgesehen sind.

3. Jalousieanordnung nach Anspruch 1 oder 2, **dadurch gekennzeichnet, dass** die Positioniermittel (40) die Jalousien (10, 12) vor das ausgewählte Fach derart verfahren, dass das Fach (4) durch eine (12) der beiden Jalousien abgedeckt ist und die Schließkanten (18, 20) der beiden Jalousien (10, 12) gegengegenüber einem Randbereich des Fachs (4) liegen, und die Öffnungsmittel (60) die eine Jalousie (12) fort bewegen.

4. Jalousieanordnung nach Anspruch 3, bei der die Jalousien vertikal angeordnet sind, **dadurch gekennzeichnet, dass** die Positioniermittel (40) die Jalousien (10, 12) derart verfahren, dass die Schließkanten (18, 20) gegenüber dem oberen Randbereich des ausgewählten Fachs (4) liegen, und die Öffnungs-/Schließmittel (60) die untere Jalousie (12) nach unten verfahren.

5. Jalousieanordnung nach einem der Ansprüche 2 bis 4, **dadurch gekennzeichnet, dass** die Öffnungs-/Schließmittel mit einem Stoppmittel versehen sind, das für das Auseinanderbewegen der Jalousien des ausgewählten Fachs freigegeben wird derart, dass die Zugfedern die Jalousien vor dem ausgewählten Fach auseinanderziehen.

6. Jalousieanordnung nach einem der Ansprüche 1, 2, 4 oder 5, **dadurch gekennzeichnet, dass** die Öffnungs-/Schließmittel beide Jalousien von einander fort bewegen.

7. Jalousieanordnung nach einem der Ansprüche 1 bis 6, **dadurch gekennzeichnet**, die Positioniermittel (40) und/oder die Öffnungs-/Schließmittel (60) einen Linearantrieb (44; 64) aufweisen.

8. Jalousieanordnung nach einem der Ansprüche 1 bis 7, **dadurch gekennzeichnet, dass** die Positioniermittel (40) und/oder die Öffnungs-/Schließmittel (60) einen Spindelantrieb (42, 44; 62, 64) aufweisen.

9. Jalousieanordnung nach einem der Ansprüche 1 bis 8, **dadurch gekennzeichnet, dass** für das Verfahren der Jalousien ein Seilzug vorgesehen ist.

10. Jalousieanordnung nach einem der Ansprüche 1 bis 9, **dadurch gekennzeichnet, dass** die Öffnungs-/Schließmittel einen Einklemmschutz aufweisen.
